# EUROPÄISCHE PATENTANMELDUNG

(11) **EP 0 823 266 A1**
(43) Veröffentlichungstag der Anmeldung: **11.02.1998**
(21) Anmeldenummer: 97117638.3
(22) Anmeldetag: 20.05.1995
(51) Int. Cl.: A62D 3/00, F23G 5/08

(54) **Verfahren und Vorrichtung zum Entsorgen von Schwelkoks und/oder Pyrolysestaub**

(30) Priorität: 26.05.1994 DE 4418410; 03.12.1994 DE 4443088; 03.12.1994 DE 4443090
(62) Teilanmeldung aus: 95107704.9
(71) Anmelder: Metallgesellschaft AG, 60325 Frankfurt am Main (DE)
(72) Erfinder: Rizzon, John, 51503 Rösrath (DE)

(57) **Zusammenfassung**

Von eisenhaltigen Stoffen befreites Material wird in eine Grobfraktion und eine Feinfraktion getrennt und die Feinfraktion in die Primärkammer (2) eines Oberflächenschmelzofens (1) eingeleitet. Im Oberflächenschmelzofen (1) wird eine Luftzahl von λ = 0,7 bis λ = 1,3 eingestellt. Das geschmolzene Material verläßt die Primärkammer (2) zusammen mit dem Rauchgas. Das geschmolzene Material wird durch die Sekundärkammer (5) geleitet und als Schlacke ausgetragen.

## Beschreibung

Die vorliegende Erfindung betrifft ein Verfahren und eine Vorrichtung zum Entsorgen von Schwelkoks und/oder Pyrolysestaub.

In Pyrolyseanlagen fällt Schwelkoks als Reststoff an. Der Kohlenstoffanteil beträgt bis zu 30 Gew.-%. Schwelkoks wird zur Zeit deponiert. Aus einem Pyrolyseofen wird Pyrolysegas mit einer Temperatur von 350°C bis 700°C abgeführt. Das Pyrolysegas wird durch Abscheidung vom groben Pyrolysestaub befreit. Der Pyrolysestaub weist einen Kohlenstoffgehalt von bis zu 35 Gew.-% auf. Das Pyrolysegas wird nach der Abscheidung einer Verwertung oder einer Nachverbrennung zugeführt. Bei der Nachverbrennung wird ein Abgas mit einer Temperatur von bis zu 1200°C erzeugt. Dieses Abgas wird in einen Pyrolyseofen zur indirekten Beheizung des Pyrolyseofens zurückgeführt. Das Abgas ist jedoch mit Schadstoffen, wie SO₂, NOₓ, HCl u. a. verunreinigt, die korrodierend wirken. Der im Pyrolysegas enthaltene Pyrolysestaub wird auf eine Temperatur aufgewärmt, bei der seine Schmelzung einsetzt. Der teilweise geschmolzene Pyrolysestaub bewirkt Anbackungen im Pyrolyseofen, wenn das Pyrolysegas zurückgeführt wird. Pyrolysestaub umfaßt im Sinne der Erfindung auch Pyrolyseruß.

Aufgabe der vorliegenden Erfindung ist es, ein wirtschaftliches und umweltschonendes Verfahren zum Entsorgen von Schwelkoks und/oder Pyrolysestaub bereitzustellen, wobei ein hoher Umsatz beim Schmelzen erfolgt.

Die der vorliegenden Erfindung zugrunde liegende Aufgabe wird durch ein Verfahren zum Entsorgen von Schwelkoks und/oder Pyrolysestaub gelöst, bei dem
a) das Material von eisenhaltigen Stoffen befreit wird,
b) das von eisenhaltigen Stoffen befreite Material in eine Grobfraktion mit einer Korngröße von > 50 mm und eine Feinfraktion mit einer Korngröße < 50 mm getrennt wird,
c) die Feinfraktion in die Primärkammer des Oberflächenschmelzofens eingeleitet wird und in der Primärkammer des Oberflächenschmelzofens (1) eine Temperatur von 1250°C bis 1500°C eingestellt wird,
d) Pyrolysegas in die Primärkammer des Oberflächenschmelzofens eingeleitet wird und in der Primärkammer (2) eine Luftzahl von λ = 0,7 bis λ = 1,3 eingestellt wird,
e) das ablaufende, geschmolzene Material mit Rauchgas die Primärkammer verläßt, das geschmolzene Material durch die Sekundärkammer geleitet und als Schlacke ausgetragen wird.

Das pyrolysierte Material kann gemäß Verfahrensstufe (a) über einen Magnetabscheider geführt werden. Die Abtrennung von eisenhaltigem Material ist erfindungsgemäß vorgesehen, weil vorhandenes Eisen den Schmelzpunkt des Materials heraufsetzt. Die Grobfraktion gemäß Verfahrensstufe (b) besteht oft zum überwiegenden Teil aus inertem Material, wie Steine, Ziegelsteine und Keramikbestandteile.

In einem solchen Fall ist erfindungsgemäß vorgesehen, die Grobfraktion einer direkten Verwertung zuzuführen. Wenn der Anteil des inerten Materials < 50 Gew.-% beträgt, ist erfindungsgemäß vorgesehen, die Grobfraktion zu zerkleinern und einzuschmelzen. Das Pyrolysegas gemäß Verfahrensstufe (d) wird zur Befeuerung des Oberflächenschmelzofens entweder nach der Kühlung und Staubabscheidung oder direkt zum Brenner des Oberflächenschmelzofens geführt und verbrannt.

Das erfindungsgemäße Verfahren weist den Vorteil auf, daß Schwelkoks und Pyrolysestaub wirtschaftlich und umweltschonend entsorgt werden. Das Verfahren ist insbesondere deshalb besonders wirtschaftlich, weil gleichzeitig das Pyrolysegas im Verfahren verwendet wird. Mineralische Bestandteile und Schwermetalle werden in eine dichte, laugungsresistente Schlacke überführt. Es wird ein umweltfreundliches Produkt mit reduziertem Volumen erhalten, das im Staußenbau, in der Bauindustrie und in der Feuerfestprodukt-Industrie verwendet werden kann. Da das erfindungsgemäße Verfahren ein Oberflächenschmelzverfahren ist, werden vorteilhafterweise nur wenige Schwermetalle und nur geringe Mengen Alkalimetalle verflüchtigt. Das Abgas enthält kein geschmolzenes Material. Es setzen sich daher in den nachgeschalteten Anlagenteilen keine Anbackungen an, die schwer entfernbar sind.

Eine bevorzugte Ausgestaltung der Erfindung ist, daß das Abgas aus der Sekundärkammer in einen Pyrolyseofen und in einen Rekuperator geleitet wird. Das erfindungsgemäße Verfahren bietet den großen Vorteil, daß die Pyrolyseanlage bei Verwendung von geschreddertem heizwertreichen Material entlastet wird, wodurch die Kapazität der Entsorgung vergrößert wird.

Eine bevorzugte Ausgestaltung der Erfindung ist, daß 20 Vol.-% bis 50 Vol.-% des Abgases aus der Sekundärkammer in den Pyrolyseofen und 40 Vol.-% bis 80 Vol.-% des Abgases in den Rekuperator geleitet werden. Der Pyrolyseofen kann somit vorteilhafterweise mit heißem Abgas aus dem Oberflächenschmelzofen geheizt werden. Durch diese Maßnahme wird die Reinigung des Abgases und die Heizenergie für den Pyrolyseofen gespart. Die Energieeinsparung ist in diesen Bereichen des Abgases besonders hoch.

Eine bevorzugte Ausgestaltung der Erfindung ist, daß das Abgas aus der Sekundärkammer im Rekuperator auf 300°C bis 500°C abgekühlt wird, 30 Vol.-% bis 80 Vol.-% der aufgewärmten Luft aus dem Rekuperator in die Primärkammer des Oberflächenschmelzofens eingeleitet werden und die restliche Luft in eine Brennkammer eingeleitet wird, in der das restliche Pyrolysegas verbrannt wird. Durch die Verwendung der aufgewärmten Luft werden besonders gute Ergebnisse bei der Energieeinsparung erreicht.

Eine bevorzugte Ausgestaltung der Erfindung ist, daß das Abgas aus dem Rekuperator in einer Quenche auf 180°C bis 260°C abgekühlt und aus der Quenche in eine Rauchgasreinigüng geleitet wird. Durch diese Maßnahme wird vorteilhafterweise die Energie des Abgases genutzt, das vor dem Eintritt in die Quenche eine Temperatur von 400°C bis 500°C aufweist.

Eine bevorzugte Ausgestaltung der Erfindung ist, daß gemäß Verfahrensstufe (d) ein oder mehrere Brennstoffe wie Heizöl, heizwertreiche Abfälle, wie Kunststoffe, Koks, Schlämme, pastöse, flüssige und gasförmige, brennbare Abfälle oder Suspensionen aus Pyrolyseöl und Pyrolysestaub eingesetzt werden. Mit diesen Brennstoffen werden besonders gute Ergebnisse bei der Einschmelzung erreicht.

Eine bevorzugte Ausgestaltung der Erfindung ist, daß die gemäß Verfahrensstufe (b) abgetrennte Grobfraktion auf eine Korngröße < 50 mm zerkleinert und mit der Feinfraktion vereinigt wird. Die Grobfraktion kann erfindungsgemäß in einem Brecher nachzerkleinert und mit der Feinfraktion in den Oberflächenschmelzofen gegeben werden. Das hat den Vorteil, daß Grobfraktionen, die einen hohen Anteil an Schwelkoks aufweisen, erfindungsgemäß eingeschmolzen werden. Bei der Korngröße von < 50 mm werden sehr gute Ergebnisse bei der Einschmelzung erreicht.

Eine bevorzugte Ausgestaltung der Erfindung ist, daß mit Sauerstoff angereicherte Luft in den Oberflächenschmelzofen eingeleitet wird. Durch die Verwendung von mit Sauerstoff angereicherter Luft werden vorteilhaft der Brennstoffbedarf und die Abgasmenge sowie die NOₓ-Konzentration im Abgas reduziert.

Erfindungsgemäß ist eine Vorrichtung zum Entsorgen von Schwelkoks und/oder Pyrolysestaub vorgesehen, bei der in der Ofendecke der Primärkammer des Oberflächenschmelzofens ein oder mehrere Brenner angeordnet sind und an einer oder mehreren Stellen der Ofendecke Sekundärluft in die Primärkammer eingeleitet wird sowie an einer oder mehreren Stellen der Ofendecke Tertiärluft in die Primärkammer eingeleitet wird. Durch diese erfindungsgemäße Maßnahme wird die NOₓ-Konzentration im Abgas wesentlich verringert.

Erfindungsgemäß ist die Verwendung des Oberflächenschmelzofens zum Entsorgen von Schwelkoks und/oder Pyrolysestaub vorgesehen.

Die Erfindung wird im folgenden anhand einer Zeichnung und anhand von Beispielen näher erläutert.

### Zeichnung:

Die Zeichnung besteht aus den Fig. 1 bis Fig. 3.
- Fig. 1: zeigt einen Oberflächeneinschmelzofen (1), einen sogenannten KSMF-Schmelzofen,
- Fig. 2: zeigt die Anordnung von drei Brennern und Einleitungsöffnungen für Sekundär- und Tertiärluft in der Ofendecke der Primärkammer des Oberflächenschmelzofens,
- Fig. 3: zeigt ein Fließschmema des erfindungsgemäßen Schmelzverfahrens.

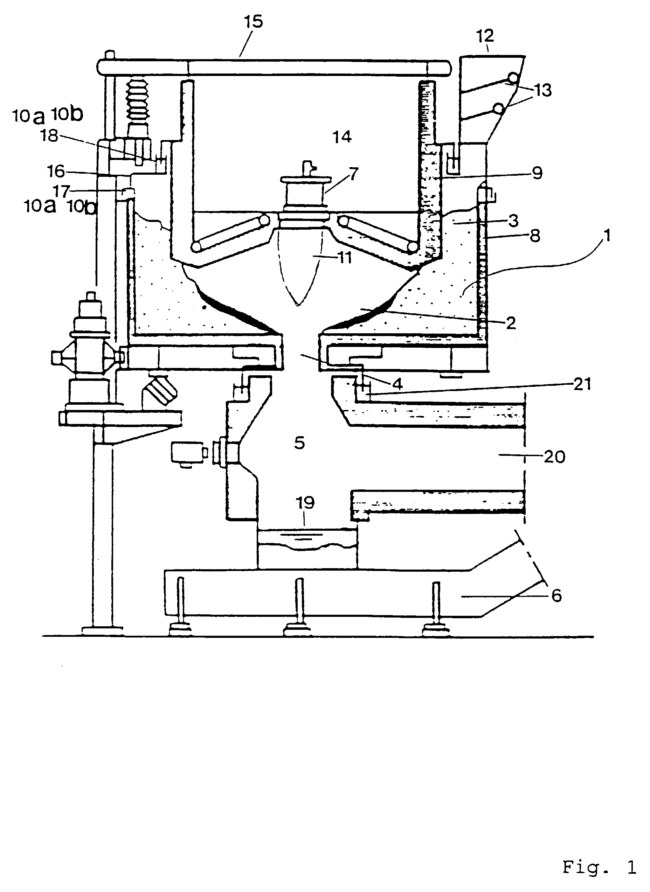

In Fig. 1 ist ein Oberflächeneinschmelzofen (1), ein sogenannter KSMF-Schmelzofen, dargestellt. Die Abkürzung KSMF steht für KUBOTA-Surface-Melting-Furnace. Der KSMF-Schmelzofen (1) und seine Handhabung sind u. a. in dem Prospekt "KUBOTA Melting Furnace for Sewage Sludge" der KUBOTA Corporation, Osaka, Japan beschrieben. Der Einschmelzofen (1), auch als Ofen (1) bezeichnet, besteht aus einem zylindrischen Außenmantel (8), in den ein zylindrischer Innenmantel (9) konzentrisch eingehängt ist. Der Außenmantel (8) dreht sich mit 0,5 bis 5 U/h. Zwischen dem Außenmantel (8) und dem Innenmantel (9) werden der Ringschacht (3) und die Primärkammer (2) gebildet. Der Innenmantel (9) läßt sich heben und senken, wodurch die Größe der Primärkammer (2) und des Ringschachts (3) an die benötigte Kapazität angepaßt wird. Im Innenraum (14) des Innenmantels (9) ist mindestens ein Brenner (7) angeordnet, dessen Flamme (11) in der Primärkammer (2) brennt. Der Innenraum (14) ist mit einem verfahrbaren Ofendeckel (15) verschlossen. Der Oberflächenschmelzofen (1) weist zum Einfüllen des Materials einen Trichter (12) auf, in dem zwei Doppelpendelklappen (13) angeordnet sind, wodurch der Oberflächenschmelzofen (1) gegen Eindringen von Falschluft abgesichert ist. Zwischen der feststehenden Ofenabdeckung und dem rotierenden Außenmantel (8) sowie dem feststehenden Innenmantel (9) sind gewöhnlich Wasserdichtungen (17, 18) angebracht. Am Oberflächenschmelzofen (1) befindet sich eine weitere Wasserdichtung (21). Die Wasserdichtungen (17, 18, 21) bieten einen absolut gasdichten Abschluß und gewährleisten einen schnellen Druckausgleich bei auftretenden Druckerhöhungen. Erfindungsgemäß sind beim Einschmelzen von Asbest und/oder asbesthaltigem Material anstatt der Wasserdichtungen (17, 18) Labyrinthdichtungen (10a) oder Schleifringdichtungen (10b) vorgesehen, die den Austrag von asbesthaltigen Stäuben aus dem Oberflächenschmelzofen zuverlässig verhindern. Im Boden der Primärkammer (2) ist zentrisch ein Auslauf (4), auch als Schlackenabzug bezeichnet, angebracht. Der Auslauf (4) bildet die Verbindung zwischen der Primärkammer (2) und der Sekundärkammer (5). Der Auslauf für die Schmelze aus der Sekundärkammer (5) befindet sich in einem Wasserbad (19). Durch das Wasserbad (19) wird ein gasdichter Abschluß erreicht. Das Wasserbad (19) steht in Verbindung mit dem Naßentschlacker (6). Die Rauchgase werden aus der Sekundärkammer (5) über den Ausgang (20) abgezogen und in an sich bekannter Weise gereinigt und abgeführt.

Das Material wird über den Trichter (12) in den Ringschacht (3) eingefüllt und durch die Drehung des Außenmantels (8) gleichmäßig verteilt. Das im Ringschacht (3) befindliche Material böscht sich von der Unterkante des feststehenden Innenmantels (9) konusförmig nach innen zum zentralen Auslauf (4) der Primärkammer (2) ab. Der eigentliche Reaktionsraum für den Schmelzprozeß wird so geschaffen. Die Flamme (11) des Brenners (7) bewirkt den Schmelzprozeß. An der Oberfläche des Materials entsteht eine 2 cm bis 5 cm dicke, schmelzflüssige Oberflächenschicht. Die ablaufende Schmelze verläßt zusammen mit den Rauchgasen die Primärkammer (2) durch den zentralen Auslauf (4). Die Schmelze fällt durch die Sekundärkammer (5) in das Wasserbad (19), wo sie granuliert. Der Naßentschlacker (6) fördert das Granulat mit einer Korngröße < 10 mm nach außen.

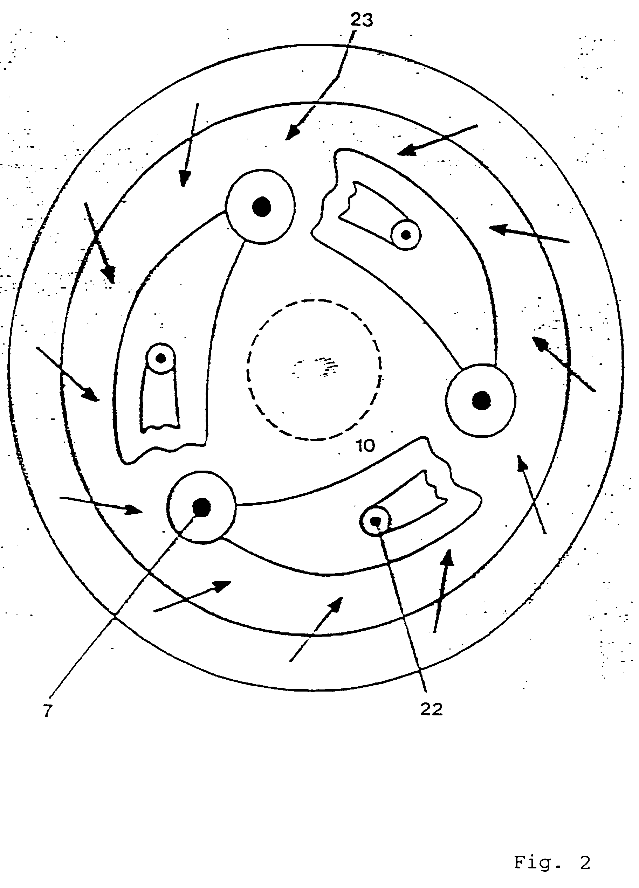

Fig. 2 zeigt die Anordnung von drei Brennern (7, 7', 7'') und drei Einleitungsöffnungen (22, 22', 22'') für Sekundärluft sowie gleichmäßig am äußeren Kreis verteilte mehrere Einleitungsöffnungen (23) für Tertiärluft in der Ofendecke (10) der Primärkammer (2) des Oberflächenschmelzofens (1). Die Flammen (11, 11', 11'') der Brenner (7, 7', 7'') brennen in der Primärkammer (2).

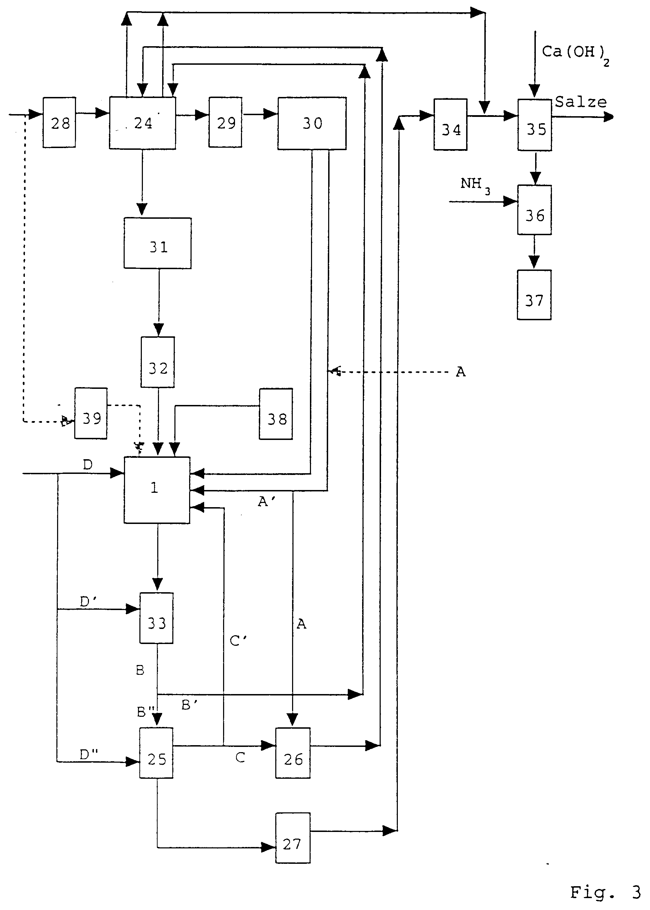

In Fig. 3 ist ein Fließschema des erfindungsgemäßen Verfahrens dargestellt. Aus einem Müllbunker (28) wird Material in einen Pyrolyseofen [Pyrolysetrommel] (24) gegeben. Das Pyrolysegas mit einer Temperatur von 400°C bis 700°C wird aus dem Pyrolyseofen (24) in eine Gaskühlung (29) geleitet. Das Pyrolysegas wird aus der Gaskühlung (29) in eine Staubabscheidung (30) geleitet und entstaubt. Der Staub wird aus der Staubabscheidung (30) über die Leitung (A) abgeführt. Die Leitung (A) wird in die Leitungen (A') und (A'') gezweigt. Das Pyrolysegas wird über die Leitung (A') in den Oberflächenschmelzofen (1) und über die Leitung (A'') in die Brennkammer (26) geleitet. Aus dem Pyrolyseofen (24) wird das pyrolysierte Material in den Magnetabscheider (31) geleitet. Im Magnetabscheider (31) erfolgt die Abtrennung von eisenhaltigem Material. Das eisenhaltige Material wird ausgetragen. Aus dem Magnetabscheider (31) wird das Material auf ein Sieb (32) gegeben. Das Material mit einer Korngröße < 50 mm wird in den KSMF-Ofen (1) gegeben. Das Material mit einer Korngröße > 50 mm wird in einem Brecher (38) zerkleinert und in den Oberflächenschmelzofen (1) gegeben. In den Oberflächenschmelzofen (1) kann das im Schredder (39) geschredderte heizwertreiche Material gegeben werden. Das Abgas aus dem Oberflächenschmelzofen (1) wird in eine Nachverbrennung (33) geleitet und über die Leitung (B) aus der Nachverbrennung (33) ausgetragen. Die Leitung (B) ist in die Leitungen (B') und (B'') gezweigt. Das Abgas aus der Nachverbrennung (33) gelangt über die Leitung (B') mit einer Temperatur von 1000°C bis 1100°C in den Pyrolyseofen (24). Über die Leitung (B'') gelangt das Abgas in den Rekuperator (25). 20 Vol.-% bis 50 Vol.-% des Abgases aus dem Oberflächenschmelzofen (1) werden in den Pyrolyseofen (24) und 40 Vol.-% bis 80 Vol.-% des Abgases werden in den Rekuperator (25) geleitet. Das Abgas wird im Rekuperator (25) auf 300°C bis 500°C abgekühlt. 30 Vol.-% bis 80 Vol.-% der aufgewärmten Luft werden aus dem Rekuperator (25) über die Leitung (C') in den Oberflächenschmelzofen (1) eingeleitet. Die restliche Luft wird über die Leitung (C) in die Brennkammer (26) eingeleitet, in der das restliche Pyrolysegas verbrannt wird. Das Abgas aus der Brennkammer (26) wird mit einer Temperatur von etwa 1000°C in den Pyrolyseofen (24) geleitet. Das Abgas aus dem Rekuperator (25) wird in eine Quenche (27) geleitet und auf 180°C bis 260°C abgekühlt und aus der Quenche (27) in eine Reststaubabscheidung (34) geleitet. Aus der Reststaubabscheidung (34) werden die Reststäube abgeführt. Das Abgas aus der Reststaubabscheidung (34) wird mit den Heizgasen aus dem Pyrolyseofen (24) vereint. Die Heizgase werden in den Pyrolyseofen (24) aus der Brennkammer (26) und über die Leitung (B') geleitet. Die vereinten Gase werden in die zweistufige Rauchgasreinigung (35) geleitet. In die zweistufige Rauchgasreinigung (35) wird Ca(OH)₂ eingeleitet, und aus der Rauchgasreinigung (35) werden Salze abgeführt. Danach wird das Gas in eine SCR (36) geleitet (SCR = Katalytische Stickoxid-Reduktionsanlage). In die SCR (36) wird NH₃ eingeleitet. Danach wird das Gas in einen Kamin (37) geleitet.

### Beispiele

### Beispiel 1:

200 kg Schwelkoks aus einer Pyrolyseanlage wurden über einen Magnetabscheider geführt. Dabei wurden 10 kg eisenhaltiges Material abgetrennt. Das restliche Material wurde auf ein Sieb mit einer Maschengröße von < 50 mm gegeben. Dabei wurden 3 kg einer Grobfraktion mit einer Korngröße von ≥ 50 mm abgetrennt. 187 kg einer Feinfraktion mit einer Korngröße < 50 mm wurden in einen KSMF-Schmelzofen gegeben. In der Primärkammer wurde eine Temperatur von 1350°C bei einer Luftzahl von λ = 1,05 eingestellt. Zur Erreichung der Temperatur wurden 45 kg Heizöl verbrannt. Die Verbrennungsluft wurde auf eine Temperatur von 400°C aufgewärmt. Aus dem Naßentschlacker wurden 135 kg Schmelzgranulat mit einer Korngröße von 1 mm bis 5 mm ausgetragen. In der Sekundärkammer wurde ein Sauerstoffgehalt von 3,5 Vol.-% eingestellt. Das Abgas aus der Sekundärkammer hatte einen NOₓ-Gehalt von 140 mg/Nm³ und einen CO-Gehalt von 15 mg/Nm³. Das Abgas aus der Sekundärkammer wies eine Temperatur von 1000°C auf. 30 Vol.-% des Abgases aus der Sekundärkammer wurden zum Beheizen eines Pyrolyseofens verwendet. 70 Vol.-% des Abgases aus der Sekundärkammer wurden in einen Rekuperator eingeleitet, in dem die Verbrennungsluft für den KSMF-Schmelzofen auf 400°C aufgewärmt wurde. 50 Vol.-% der auf 400°C aufgewärmten Luft wurden in den KSMF-Schmelzofen eingeleitet. Die restlichen 50 Vol.-% wurden in eine Brennkammer aufgegeben, in der das Pyrolysegas nachverbrannt wurde. Die auf 450°C abgekühlten Abgase aus dem Rekuperator wurden in eine Quenche eingeleitet. In der Quenche wurde durch Eindüsen von Wasser die Temperatur der Abgase auf 200°C abgesenkt. Die Abgase wurden einer bekannten Abgasreinigung zugeführt.

### Beispiel 2:

Beispiel 2 wurde wie Beispiel 1 durchgeführt, bei dem die Verbrennungsluft mit Sauerstoff auf 30 Vol.-% O₂ angereichert wurde. Die Menge des Heizöls wurde auf 25 kg reduziert. Die dabei produzierte Rauchgasmenge wurde um 30 % gesenkt. Aus dem Naßentschlacker wurden 135 kg Schmelzgranulat mit einer Korngröße von 1 mm bis 5 mm ausgetragen.

### Beispiel 3:

Beispiel 3 wurde wie Beispiel 1 durchgeführt, bei dem Pyrolysegas in den KSMF-Schmelzofen eingeleitet wurde. Die Menge des Heizöls wurde auf 10 kg reduziert. Aus dem Naßentschlacker wurden 135 kg Schmelzgranulat mit einer Korngröße von 1 mm bis 5 mm ausgetragen.

### Bezugszeichenliste

- 1: Oberflächenschmelzofen
- 2: Primärkammer
- 3: Ringschacht
- 4: Auslauf
- 5: Sekundärkammer
- 6: Naßentschlacker
- 7: Brenner
- 8: rotierender Außenmantel
- 9: feststehender Innenmantel
- 10: Ofendecke (10)
- 10a: Labyrinthdichtungen
- 10b: Schleifringdichtungen
- 11: Flamme
- 12: Trichter
- 13: Doppelpendelklappen
- 14: Innenraum
- 15: Ofendeckel
- 16: Ofenabdeckung
- 17: Wasserdichtungen
- 18: Wasserdichtungen
- 19: Wasserbad
- 20: Ausgang
- 21: Wasserdichtung
- 22: Einleitungsöffnungen
- 23: Einleitungsöffnungen
- 24: Pyrolyseofen
- 25: Rekuperator
- 26: Brennkammer
- 27: Quenche
- 28: Müllbunker
- 29: Gaskühlung
- 30: Staubabscheidung
- 31: Magnetabscheider
- 32: Sieb
- 33: Nachverbrennung
- 34: Reststaubabscheidung
- 35: Rauchgasreinigung
- 36: SCR
- 37: Kamin
Leitung A, B, C, D

## Patentansprüche

1. Verfahren zum Entsorgen von Schwelkoks und/oder Pyrolysestaub, bei dem
a) das Material von eisenhaltigen Stoffen befreit wird,
b) das von eisenhaltigen Stoffen befreite Material in eine Grobfraktion mit einer Korngröße von > 50 mm und eine Feinfraktion mit einer Korngröße < 50 mm getrennt wird,
c) die Feinfraktion in die Primärkammer (2) des Oberflächenschmelzofens (1) eingeleitet wird und in der Primärkammer (2) des Oberflächenschmelzofens (1) eine Temperatur von 1250°C bis 1500°C eingestellt wird,
d) Pyrolysegas in die Primärkammer (2) des Oberflächenschmelzofens (1) eingeleitet wird und in der Primärkammer (2) eine Luftzahl von λ = 0,7 bis λ = 1,3 eingestellt wird,
e) das ablaufende, geschmolzene Material mit Rauchgas die Primärkammer (2) verläßt, das geschmolzene Material durch die Sekundärkammer (5) geleitet und als Schlacke ausgetragen wird.

2. Verfahren nach Anspruch 1, bei dem Abgas aus der Sekundärkammer (5) in einen Pyrolyseofen (24) und in einen Rekuperator (25) geleitet wird.

3. Verfahren nach Anspruch 2, bei dem 20 Vol.-% bis 50 Vol.-% des Abgases aus der Sekundärkammer (5) in den Pyrolyseofen (24) und 40 Vol.-% bis 80 Vol.-% des Abgases in den Rekuperator (25) geleitet werden.

4. Verfahren nach den Ansprüchen 1 bis 3, bei dem das Abgas aus der Sekundärkammer (5) im Rekuperator (25) auf 300°C bis 500°C abgekühlt wird, 30 Vol.-% bis 80 Vol.-% der aufgewärmten Luft aus dem Rekuperator (25) in die Primärkammer (2) des Oberflächenschmelzofens (1) eingeleitet werden und die restliche Luft in eine Brennkammer (26) eingeleitet wird, in der das restliche Pyrolysegas verbrannt wird.

5. Verfahren nach den Ansprüchen 1 bis 4, bei dem das Abgas aus dem Rekuperator (25) in einer Quenche (27) auf 180°C bis 260°C abgekühlt und aus der Quenche (27) in eine Rauchgasreinigung geleitet wird.

6. Verfahren nach den Ansprüchen 1 bis 5, bei dem gemäß Verfahrensstufe (d) ein oder mehrere Brennstoffe wie Heizöl, heizwertreiche Abfälle, wie Kunststoffe, Koks, Schlämme, pastöse, flüssige und gasförmige brennbare Abfälle oder Suspensionen aus Pyrolyseöl und Pyrolysestaub eingesetzt werden.

7. Verfahren nach den Ansprüchen 1 bis 6, bei dem die gemäß Verfahrensstufe (b) abgetrennte Grobfraktion auf eine Korngröße < 50 mm zerkleinert und mit der Feinfraktion vereinigt wird.

8. Verfahren nach den Ansprüchen 1 bis 7, bei dem mit Sauerstoff angereicherte Luft in den Oberflächenschmelzofen (1) eingeleitet wird.

9. Vorrichtung zum Entsorgen von Schwelkoks und/oder Pyrolysestaub, bei der in der Ofendecke (10) der Primärkammer (2) des Oberflächenschmelzofens (1) ein oder mehrere Brenner (7) angeordnet sind und an einer oder mehreren Stellen (22) der Ofendecke (10) Sekundärluft in die Primärkammer (2) eingeleitet wird sowie an einer oder mehreren Stellen (23) der Ofendecke (10) Tertiärluft in die Primärkammer (2) eingeleitet wird.

10. Verwendung eines Oberflächenschmelzofens (1) zum Entsorgen von Schwelkoks und/oder Pyrolysestaub.
